**Europäisches Patentamt**

(19) **European Patent Office**

**Office européen des brevets**

(11) Veröffentlichungsnummer: **0 030 764**

**A1**

## (12) EUROPÄISCHE PATENTANMELDUNG

(21) Anmeldenummer: **80201169.2**

(22) Anmeldetag: **08.12.80**

(51) Int. Cl.³: **G 01 S 13/56**
**G 08 B 13/16**

(30) Priorität: **15.12.79 DE 2950626**

(43) Veröffentlichungstag der Anmeldung:
**24.06.81 Patentblatt 81/25**

(84) Benannte Vertragsstaaten:
**DE FR GB SE**

(71) Anmelder: **Philips Patentverwaltung GmbH**
**Steindamm 94**
**D-2000 Hamburg 1(DE)**

(84) Benannte Vertragsstaaten:
**DE**

(71) Anmelder: **N.V. Philips' Gloeilampenfabrieken**
**Pieter Zeemanstraat 6**
**NL-5621 CT Eindhoven(NL)**

(84) Benannte Vertragsstaaten:
**FR GB SE**

(72) Erfinder: **Schilz, Wolfram**
**Aurikelstieg 18**
**D-2000 Norderstedt(DE)**

(72) Erfinder: **Schiek, Burkhard**
**Auf dem Backenberg 5**
**D-4630 Bochum/Querenburg(DE)**

(74) Vertreter: **Hartmann, Heinrich et al,**
**Philips Patentverwaltung GmbH Steindamm 94**
**D-2000 Hamburg 1(DE)**

(54) **Dopplerradar-Messverfahren und Vorrichtung zur Durchführung dieses Verfahrens.**

(57) Die Erfindung gibt eine Modulationsart für ein Doppler-radar-Meßverfahren an, durch die es möglich ist, die "Empfindlichkeit" in Abhängigkeit des Abstandes des Meßobjektes von den Antennen zu beeinflussen. Während ohne die Erfindung kleine Insekten, kurz vor den Antennen fliegend, ein großes Reflexionssignal erzeugen, während der zu erfassende Einbrecher in z.B. 4 m Entfernung von den Antennen nur ein im Verhältnis zu dem Insektenbeispiel geringes Signal erzeugte, kann dieses Mißverhältnis durch Einsatz der Erfindung kompensiert werden.

Fig.4

**EP 0 030 764 A1**

"Dopplerradar-Meßverfahren und Vorrichtung zur Durchführung dieses Verfahrens"

Die Erfindung bezieht sich auf ein Dopplerradar-Meßverfahren, bei dem eine Sendeantenne das Sendesignal aussendet und eine Empfangsantenne das vom Meßobjekt reflektierte Empfangssignal empfängt, bei dem weiterhin ein
Teil des Sendesignals und das Empfangssignal einem Mischer
zugeführt werden, an dessen Ausgang das Differenzfrequenzsignal zur Verfügung steht, dessen Frequenz ein Maß für
die Entfernung zum Meßobjekt ist und das einer Auswerteeinrichtung zugeführt wird, bei dem weiterhin das Sendesignal in der Frequenz moduliert ist.

Eine Anwendungsmöglichkeit für ein derartiges Dopplerradar-Meßverfahren sind Alarm-Überwachungsanlagen. Die
Aufgabe bei diesen besteht meistens darin, einen Raum zu
überwachen, d.h., der von den dort tätigen Personen verlassene Raum wird von der Überwachungsantenne ausgeleuchtet
und es soll ein Alarm ausgelöst werden, sobald sich in
diesem Raum z.B. ein Einbrecher bewegt. - Das Problem einer
derartigen Überwachung besteht darin, die Antenne auf die
erforderliche Empfindlichkeit einzustellen. Es hat sich
nämlich gezeigt, daß verhältnismäßig kleine Insekten, die
kurz vor den Antennen vorbeifliegen, genauso einen Alarm
auslösen wie die zu erfassenden Einbrecher, deren Abstand
zu den Antennen beim Eindringen in den Raum meistens noch
mehrere Meter beträgt. Das kleine, nahe Objekt löst also
genauso wie das große, weiter entfernt sich bewegende
Objekt einen Alarm aus, wobei das von der Empfangsantenne empfangene Empfangssignal sogar von dem sich sehr
nah vor den Antennen vorbeibewegenden Objekt infolge des
größeren Echos noch viel stärker war.

Die Aufgabe der Erfindung besteht also darin, diese Entfernungsabhängigkeit zu vermindern. Es sollte eine Lösung gefunden werden, mit der eine Raumüberwachung möglich ist, ohne daß durch kleinste sich im Nahbereich bewegende Objekte ein Fehlalarm ausgelöst wird. Gleichzeitig sollte es jedoch möglich sein, die sogenannte Ausleuchtung den jeweiligen Erfordernissen, also z.B. den Größen des zu überwachenden Raumes, anzupassen.

Dabei wird die Tatsache ausgenutzt, daß eine reine Frequenzmodulation bei der Mischung auf einen Träger nicht detektiert wird, da sich die Amplituden der Seitenbänder zu Null addieren. Das Signal muß vorher durch einen Diskriminator ganz oder teilweise in ein amplitudenmoduliertes Signal überführt werden. Diese Aufgabe übernimmt die Ausbreitungsstrecke als Verzögerungsleitung. Demzufolge steigt im Nahbereich der Diskriminierungswirkungsgrad mit der Entfernung an und kann die Abstandsabhängigkeit des Dopplersignals kompensieren.

Um einen Raum oder einen Außenbereich auszuleuchten, werden eine Sende- und eine Empfangsantenne benötigt, die beide einen großen Öffnungswinkel aufweisen müssen, damit nämlich der gesamte zu überwachende Bereich erfaßt wird.

Ist das Objekt nicht zu groß, dann wird die Empfangsantenne ein Streusignal empfangen. Es gilt, daß das Meßsignal auf seinem Wege durch den Raum nach dem $1/r^2$-Gesetz abnimmt. Aufgrund dieser Abhängigkeit ergeben sich oben genannte nachteilige Tatbestände bezüglich der Reflexionen ausgelöst von einem Kleinstobjekt im Nahbereich im Verhältnis zu dem vom zu erfassenden Einbrecher ausgelösten im weiter ab liegenden Bereich.

Die Aufgabe der Erfindung präzisiert sich infolgedessen einerseits darauf, ein Dopplerradar – Meßverfahren anzugeben, mit dem es gelingt, den durch die Raumdämpfung bedingten $1/r^2$-Abfall der Empfangsfeldstärke für kleine, reflektierende Objekte im Nahbereich zu vermindern.

Dabei ist es erwünscht, zugleich auch den $1/r$-Abfall in der Empfangsfeldstärke selbst zu vermindern. Ein derartiger $1/r$-Abfall tritt dann auf, wenn der Reflektor sehr groß ist, also ein Reflektor ist, der eine "unendliche" ausgedehnte Halbebene quer zur Ausbreitungsrichtung der Welle ist. Wenn es gelingt, den $1/r$-Abfall der Empfangsfeldstärke gerade zu kompensieren, dann ergeben sich Anwendungen z.B. zur entfernungsunabhängigen Bestimmung der Reflexionseigenschaften eines Objektes.

Zur aufgabengemäßen Verminderung der $1/r$- und der $1/r^2$-Abhängigkeiten werden, wie später gezeigt wird, verschiedene Demodulationsverfahren verwendet.

Zur Lösung der genannten Aufgabe ist bei einem Dopplerradar-Meßverfahren der eingangs genannten Art nach der Erfindung die Modulationsfrequenz fm derart gewählt, daß ihre Wellenlänge $\lambda$ größer oder gleich dem Vierfachen des Abstandes ist, und demzufolge die Entfernungsabhängigkeit der Empfangscharakteristik über einen bestimmten Abstand von der Antenne vermindert wird.

In weiterer Ausgestaltung der Erfindung kann die Modulation sinusförmig mit der Frequenz fm erfolgen und als Meßgröße kann der Spitzenwert oder der quadratische Mittelwert des Differenzfrequenzsignals am Ausgang des Mischers ebenfalls bei der Frequenz fm verwendet werden.

Auch kann die Frequenzmodulation sinusförmig mit der Frequenz fm erfolgen und das Differenzfrequenzsignal mit einem Referenzsignal der Frequenz fm phasenempfindlich gleichgerichtet werden, und zwar derart, daß die Phasendifferenz beider Signale bei antennennahen Objekten etwa
$90^o$ beträgt.

Weiterhin kann die Frequenzmodulation impulsförmig erfolgen, und das am Mischerausgang anstehende Differenzfrequenzsignal $S_{ZF}(t)$ kann zu bestimmten Zeitpunkten t' abgetastet werden, wobei t' derart gewählt ist, daß innerhalb des Meßbereiches der Momentanwert $U_{fd}(t')$ des
Differenzfrequenzsignals konstant ist.

Die impulsförmige Frequenzmodulation erzeugt nämlich eine
sägezahnförmige Phasenmodulation, die am Mischerausgang
ein für die Auswertung geeignetes Signal darstellt.

Eine Vorrichtung zur Durchführung des Verfahrens ist dadurch gekennzeichnet, daß die Auswerteeinrichtung u.a. aus
einem Einseitenband-Empfänger mit zwei balancierten
Mischern, einem $0^o$-Hybrid, einem $90^o$-Hybrid und einem
Zwischenfrequenz-$90^o$-Phasenschieber besteht, wobei die
Ausgänge des $0^o$-Hybrids mit je einem ersten Eingang der
balancierten Mischer verbunden sind und die Ausgänge des
$90^o$-Hybrids mit je einem zweiten Eingang der balancierten
Mischer verbunden sind und der Ausgang des einen Mischers
direkt und der Ausgang des anderen Mischers über den
Zwischenfrequenz-$90^o$-Phasenschiebers mit der Auswerteeinrichtung verbunden sind.

Bei Anwendung des Meßverfahrens nach der Erfindung ist es
möglich, die Raumdämpfung im zu überwachenden Bereich auf
einfache Weise zu kompensieren. Das Meßverfahren nach
der Erfindung benötigt nur wenig zusätzliche Bandbreite.
Die hierfür freigegebenen Kanalbreiten in den betreffenden
Frequenzbändern reichen also aus.

Ausführungsbeispiele der Erfindung sind in der Zeichnung
dargestellt und werden im folgenden näher erläutert. Es

BAD ORIGINAL

zeigen

Fig.1    eine Dopplerradar-Meßanordnung in schematischer
         Darstellung,

Fig.2    die Momentanfrequenz $\Omega(t)$ und die Phasenmodu-
         lation $\varphi(t)$ in Abhängigkeit von der Zeit,

Fig.3    die Amplitude $U_{fd}$ am Mischerausgang in Abhängigkeit von der Zeit,

Fig.4    eine Vorrichtung zur Durchführung des Verfahrens
         nach der Erfindung in einer vorzugsweisen Aus-
         führung mit einem Einseitenbandempfänger be-
         sonderer Ausführung,

Fig.5    ein Ausgangssignal als Funktion des Abstandes
         zwischen dem Reflektor und der Antenne,

Fig.6    die Amplitude des Differenzfrequenzsignals bei
         Verwendung eines großen Reflektors als Funktion
         des Abstandes,

Fig.7    die Amplitude des Differenzfrequenzsignals bei
         einem kleinen Reflektor als Funktion des Abstandes und

Fig.8    die Amplitudenwerte, gemessen zu den Zeitpunkten
         t' als Funktion des Abstandes.

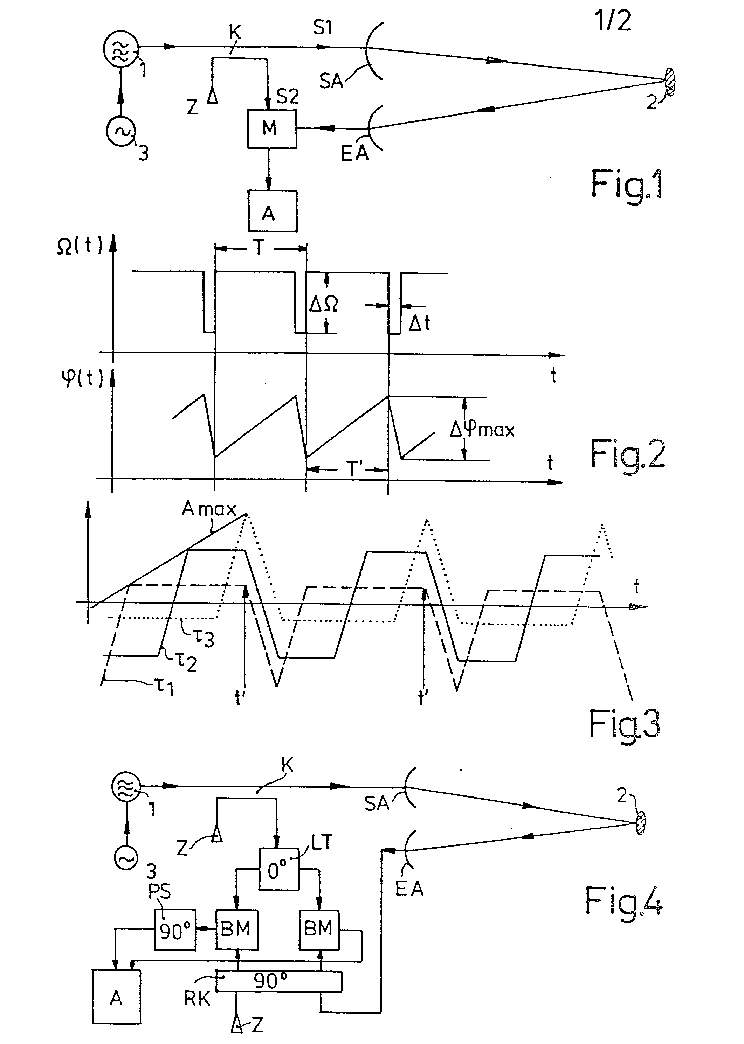

Fig.1 zeigt einen Mikrowellensender 1, dessen Hochfrequenzleistung $S_1$ mit der Frequenz $\Omega o/2\pi$ über eine Sendeantenne
SA abgestrahlt, an einem Objekt 2 reflektiert, mit einer
Empfangsantenne EA wieder empfangen und einem Mischer M
zugeführt wird. Diesem Mischer M wird weiterhin über einen
Koppler K ein Teil der Sendeleistung $S_2$ zugeführt. Z ist
ein reflektionsfreier Abschluß. Zusätzlich wird nun nach
der Erfindung der Mikrowellensender 1 von dem Modulator 3
in besonderer Weise in der Frequenz moduliert. Am
Mischerausgang steht das Differenzfrequenzsignal, das
einer Auswerteeinrichtung A zugeführt wird.

Fig.2 zeigt die Momentanfrequenz $\Omega(t)$, die impulsförmig
mit der Amplitude $\Delta\Omega$ frequenzmoduliert ist. Die Dauer

des Modulationsimpulses ist $\Delta t$ und die Periode T. Im unteren Teilbild zeigt die Fig.2 die aus dieser Frequenzmodulation resultierende sägezahnförmige Phasenmodulation $\varphi(t)$ mit der Maximalamplitude $\Delta\varphi_{max}$.

In Fig.3 sind $\tau_1$, $\tau_2$ und $\tau_3$ die Laufzeiten des jeweiligen Signals. Der Amplitudenverlauf am Ausgang des Empfangsmischers ist für drei verschiedene Laufzeiten $\tau_1$, $\tau_2$ und $\tau_3$ gezeigt. Die Kurve $A_{max}$ ist die aller Maximalwerte, die für verschiedene $\tau$ angenommen werden in Abhängigkeit von der Zeit t. t' gibt den Zeitpunkt innerhalb der in Fig.2 definierten Periode T an, zu dem alle Amplitudenverläufe, die zu den verschiedenen $\tau$ gehören, einen Maximalwert annehmen.

Zunächst soll eine sinusförmige Frequenzmodulation mit der Modulationsfrequenz $\omega_m/2\pi$ betrachtet werden. Es sei noch einmal betont, daß sowohl das gesendete (S1) als auch das Mischoszillator-Signal (S2) in genau gleicher Weise frequenzmoduliert sind, weil diese Signale aus der gleichen Quelle stammen.

Unter diesen Bedingungen hat am Ausgang des Mischers M das Differenzfrequenzsignal $S_{ZF}(t)$ die Form

$$S_{ZF}(t) = 2\eta \cdot A_S \cdot \Delta\varphi_m \cdot \sin(\Omega_0 t)\sin\frac{\omega_m\tau}{2}\cos(\omega_m t - \frac{\omega\tau}{2}, \quad (1)$$

solange die Forderung

$$2\Delta\varphi_m \cdot \sin(\frac{\omega_m\tau}{2}) \leq 1 \qquad (2)$$

erfüllt ist. Dabei ist $\tau$ die Laufzeit von den Antennen bis zum Objekt und zurück und $\Delta\varphi_m$ ist der maximale Phasenhub, der mit dem trägerfrequenten Frequenzhub $\Delta\Omega$ über die Beziehung

$$\Delta\Psi_m = \frac{\Delta\Omega}{\omega_m} \qquad (3)$$

verknüpft ist.

In Gleichung (1) beschreibt $\eta$ den Konversionswirkungsgrad des Mischers M, $A_S$ die Amplitude des empfangenen Signals und der Ausdruck $\sin(\Omega_o t)$ beschreibt den eigentlichen Doppler-Effekt.

Ist für große Reflektoren die Ausbreitungsdämpfung proportional zur Entfernung und damit zu $\tau$, dann ist für eine konstante Modulationsfrequenz $\omega_m$ das Differenzfrequenzsignal gegeben durch:

$$S_{ZF} = K_1 \cdot \cos(\Omega_o \tau) \cdot \frac{\sin(\frac{\omega_m \tau}{2})}{(\frac{\omega_m \tau}{2})} \cdot \cos(\omega_m t - \frac{\omega_m \tau}{2}) \qquad (4)$$

$K_1$ = Konstante.

Damit ist für eine Spitzengleichrichtung bei der Differenzfrequenz für $\omega_m \tau \ll 1$ die gemessene Amplitude $U_{fd}$ des Differenzfrequenzsignals konstant und unabhängig von der Entfernung. Das heißt, das gewählte Modulationsverfahren bewirkt einen Anstieg der Differenzsignal-Amplitude $U_{fd}$ frequenz mit wachsender Entfernung derart, daß die ansteigende Ausbreitundsdämpfung gerade kompensiert wird. Für größere $\omega_m \tau$ ist der Spitzenwert des Differenzfrequenzsignals

$$S_{spitze} \sim \frac{\sin(\frac{\omega_m \tau}{2})}{(\frac{\omega_m \tau}{2})} \qquad (5)$$

wobei $S_{spitze}$ die Spitzenamplitude ist.

Hierdurch ist angenähert das Verhalten eines räumlichen Tiefpasses beschrieben. Dies bedeutet bis zu einer Entfernung, gegeben etwa durch $\omega_m \tau \approx 2\pi$, daß die Empfangssignale in etwa konstant sind. Bei größeren Entfernungen sind die Empfangssignale sehr viel kleiner.

Ist für kleine Streukörper die Ausbreitungsdämpfung der Amplitude proportional zum Quadrat der Entfernung und damit zu $\tau^2$, dann kann eine phasenempfindliche Gleichrichtung des Differenzfrequenzsignals $S_{ZF}$ mit dem Referenz-Signal

$$A_{ref}(t) = A_{ref} \cdot \sin(\omega_m t + \theta) \qquad (6)$$

vorgenommen werden und es wird für $\theta = o$ als demoduliertes Signal $A_{dem}$

$$A_{dem} \quad \frac{\sin^2(\frac{\omega_m \tau}{2})}{(\frac{\omega_m \tau}{2})^2} \qquad (7)$$

Damit kann für $\omega_m \tau \ll 1$ und kleine Streukörper wiederum der durch die Ausbreitungsdämpfung bedingte Abfall des Empfangssignals gerade kompensiert werden. Für größere $\omega_m \tau$ läßt sich wiederum eine räumliche Tiefpaß-Funktion annähern.

Mit dem beschriebenen Verfahren kann die beim Dopplerradar zu verarbeitende "Dynamik" sehr wesentlich reduziert werden und damit ist die Gefahr eines falschen Alarms erheblich verringert.

Für den Fall des großen Reflektors und damit einer Abnahme des Empfangssignals proportional zu $\tau$, kann eine noch genauere Kompensation mit einer Dreiecks-Phasenmodulation erreicht werden. Nach Fig.2 wird die dreiecksförmige Phasenmodulation in einfacher Weise durch eine impulsförmige Frequenzmodulation erreicht. Nach der Mischung steht am Mischerausgang dann ein trapezförmiges Signal, — wie in Fig.3 gezeigt, von dem nach der Erfindung zu bestimmten Zeitpunkten, die in Fig.3 mit t' bezeichnet sind, Abtastwerte $U_{fd}(t';\tau)$ ist konstant, also unabhängig von der Entfernung r, solange

$$r \leq c \cdot \frac{\tau}{2} \qquad\qquad (8)$$

ist. Dabei ist c die Lichtgeschwindigkeit. Außerdem ist dabei vorausgesetzt, daß $\Delta\Psi_{max}$, siehe Fig.2, kleiner als 1 bleibt, also $\Delta\Omega \cdot \Delta t < 1$ ist.

Bei manchen Anwendungen, z.B. bei der "reinen" Entfernungsmessung, wird ein Differenzfrequenzsignal $S_{ZF}$ benötigt, das die Phaseninformation der Raum-Strecke $\Omega_o\tau$ direkt enthält. Dazu kann ein an sich bekannter Einseitenbandempfänger verwendet werden. Dieser besteht, wie in Fig.4 gezeigt, u.a. aus einem Leistungsteiler oder $0^o$-Hybrid LT, einem 3 db-Koppler oder $90^o$-Hybrid RK, zwei balancierten Mischern BM und einem $90^o$-Phasenschieber PS bei der Differenzfrequenz. Das Differenzfrequenzsignal hat eine Form

$$A_{ZF}=K_2 \cdot \frac{\sin(\frac{\omega_m\tau}{2})}{(\frac{\omega_m\tau}{2})} \cdot \cos(\omega_m t + \Omega_o\tau - \frac{\omega_m\tau}{2}) \qquad (9)$$

Damit wird die Phase der Raum-Strecke $\Omega\cdot\tau$ direkt auf die Phase des Differenzfrequenzsignals übertragen, während die Empfangscharakteristik erhalten bleibt.

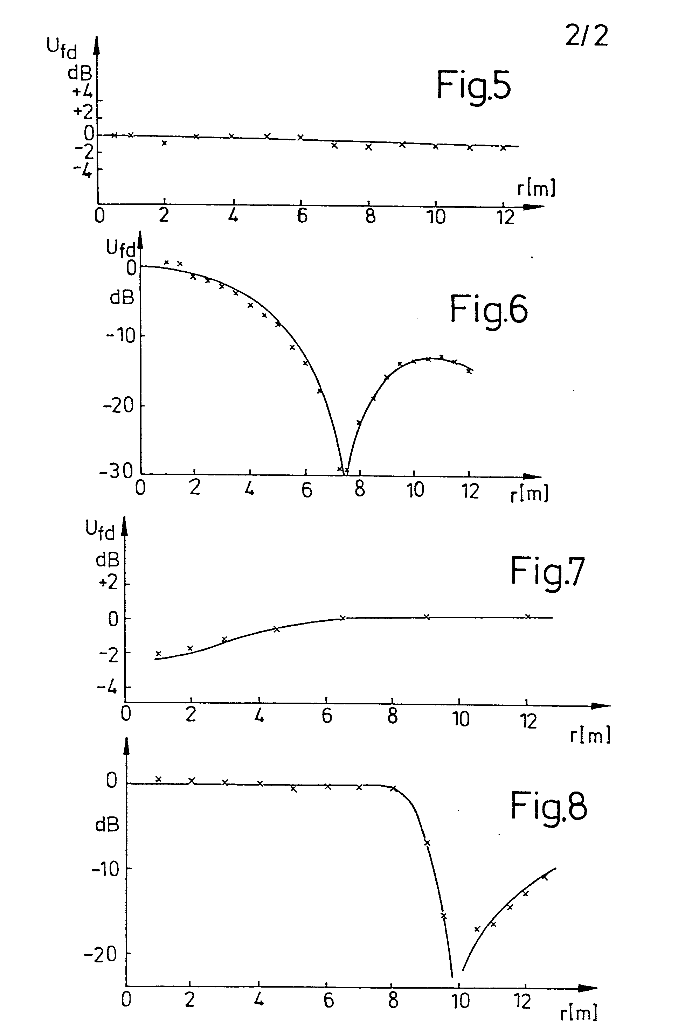

Ein derartiges Dopplerradar-Meßverfahren benutzt z.B. eine Mikrowellenträgerfrequenz im Bereich von etwa 8 bis 13 GHz. Räume, die zu überwachen sind, weisen z.B. Raumtiefen von 20 m auf. Der Abstand der Nullstelle, wie noch nachfolgend anhand der Fig.6 und 7 erklärt, liegt dann bei $\lambda/4$ und der konstante Bereich, wie noch nachfolgend für die Fig.5 und 8 erklärt, erstreckt sich über $\lambda/8$. Bei diesen beispielsweisen Tiefen muß dann die Wellen-

länge $\lambda$ der Modulationsfrequenz größer oder gleich dem 8-fachen der Raumtiefe betragen. Bei einer Raumtiefe von z.B. 20 m sind dies 160 m, was einer Modulationsfrequenz von 2 MHz entspricht.

Nachdem die physikalisch mathematische Begründung und Erläuterung der Erfindung gegeben wurde, sollen abschließend die in den Fig.5, 6, 7 und 8 dargestellten Meßergebnisse zur weiteren Erläuterung diskutiert werden.

Fig.5 zeigt das mit einem kleinen Reflektor gemessene Ausgangssignal bei phasenempfindlicher Gleichrichtung als Funktion des Abstandes zwischen dem Reflektor und der Antenne.

Fig.6 zeigt die Amplitude des Differenzfrequenzsignals bei Verwendung eines großen Reflektors als Funktion des Abstandes. Fig.6 zeigt im Abstandsbereich bis 3 m die nahezu konstante Amplitude und die Nullstelle der Empfindlichkeit bei ca. 7,5 m.

Die Fig.7 zeigt die Amplitude des Differenzfrequenzsignals bei einem kleinen Reflektor und phasenempfindlicher Gleichrichtung, wobei die Phasendifferenz der Signale an den Mischereingängen bei antennennahen Objekten ca. 90° beträgt als Funktion des Abstandes.

Fig.8 zeigt die Amplitudenwerte, gemessen zu den Zeitpunkten t' nach Fig.3 bei impulsförmiger Frequenzmodulation als Funktion des Abstandes. Fig.8 zeigt die Entfernungsabhängigkeit der Differenzfrequenzamplitude bis zu einer Entfernung von etwa 8 m.

Patentansprüche

1.      Dopplerradar-Meßverfahren, bei dem eine Sendeantenne das Sendesignal aussendet und eine Empfangsantenne
das vom Meßobjekt reflektierte Empfangssignal empfängt,
bei dem weiterhin ein Teil des Sendesignals und das Empfangssignal einem Mischer zugeführt werden, an dessen Ausgang das Differenzfrequenzsignal zur Verfügung steht, dessen
Frequenz ein Maß für die Entfernung zum Meßobjekt ist und
das einer Auswerteeinrichtung zugeführt wird, bei dem
weiterhin das Sendesignal in der Frequenz moduliert ist,
dadurch gekennzeichnet,
daß die Modulationsfrequenz derart gewählt ist, daß ihre
Wellenlänge größer oder gleich dem Vierfachen des Abstandes ist, und demzufolge die Entfernungsabhängigkeit
der Empfangscharakteristik über einen bestimmten Abstand
von der Antenne vermindert wird.

2.      Meßverfahren nach Anspruch 1, dadurch gekennzeichnet,
daß die Modulation sinusförmig mit der Frequenz fm erfolgt und daß als Meßgröße der Spitzenwert oder der
quadratische Mittelwert des Differenzfrequenzsignals am
Ausgang des Mischers ebenfalls bei der Frequenz fm verwendet wird.

3.      Meßverfahren nach Anspruch 1 oder 2, dadurch gekennzeichnet,
daß die Frequenzmodulation sinusförmig mit der Frequenz
fm erfolgt und daß das Differenzfrequenzsignal mit einem
Referenz-Signal der Frequenz fm phasenempfindlich gleichgerichtet wird, und zwar derart, daß die Phasendifferenz
beider Signale bei antennennahen Objekten etwa 90° beträgt.

4.      Meßverfahren nach einem oder mehreren der vorhergehenden Ansprüche, dadurch gekennzeichnet, daß die Frequenzmodulation impulsförmig erfolgt und daß das am Mischerausgang anstehende Differenzfrequenzsignal $S_{ZF}(t)$ zu bestimmten Zeitpunkten t' abgetastet wird, wobei t' derart gewählt ist, daß innerhalb des Meßbereiches der Momentanwert $U_{fd}(t')$ des Differenzfrequenzsignals konstant ist.

5.      Vorrichtung zur Durchführung des Verfahrens nach einem oder mehreren der vorhergehenden Ansprüche, dadurch gekennzeichnet, daß die Auswerteeinrichtung (A) u.a. aus einem Einseitenbandempfänger mit zwei balancierten Mischern (BM), einem $0^O$-Hybrid (LT), einem $90^O$-Hybrid (RK) und einem Zwischenfrequenz-$90^O$-Phasenschieber (PS) besteht, wobei die Ausgänge des $0^O$-Hybrids (LT) mit je einem ersten Eingang der balancierten Mischer (BM) verbunden sind und die Ausgänge des $90^O$-Hybrids (RK) mit je einem zweiten Eingang der balancierten Mischer (BM) verbunden sind und der Ausgang des einen Mischers direkt und der Ausgang des anderen Mischers über den Zwischenfrequenz-$90^O$-Phasenschieber (PF) mit der Auswerteeinrichtung(A) verbunden sind.

Fig.1

Fig.2

Fig.3

Fig.4

1-Ⅱ-PHD 79-149

Fig.5

Fig.6

Fig.7

Fig.8

))) **Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 208 667 (SCHOMANDL KG)  * Seite 3, Zeile 12 u. ff. *  -- | 1 |
| | DE - B2 - 2 711 869 (HOCHIKI CORP.)  * Spalte 3, Zeile 36 u. ff. *  -- | 1 |
| | DE - A - 2 242 876 (TOYOTA IIDOSHA KOGYO K.K. et al.)  * Seite 6, Zeile 1 u. ff. *  -- | 2 |
| | Patents Abstracts of Japan  Band 3, Nr. 90, 31 Juli 1979,  Seite 52 E 127  & JP - A - 54 - 68199  -- | 5 |
| A | US - A - 4 054 871 (J.D. TERRELL et al.)  * Fig. 1 bis 6 *  -- | |
| A | US - A - 4 051 472 (D.F. ALBANESE et al.)  * Spalte 2, Zeile 57 u. ff; Fig. 1 bis 8 *  -- | |
| A | US - A - 3 967 283 (R.V. CLARK et al.)  * Fig. 1 bis 12 *  -- | |
| A | US - A - 3 942 178 (K.R. HACKETT)  * Fig. 1 bis 10 *  ---- | |

**KLASSIFIKATION DER ANMELDUNG (Int. Cl³)**

G 01 S 13/56
G 08 B 13/16

**RECHERCHIERTE SACHGEBIETE (Int. Cl³)**

G 01 S 13/00
G 08 B 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X| Der vorliegende Recherchenbericht wurde für alle Patentansprüche erstellt.

| Recherchenort | Abschlußdatum der Recherche | Prüfer |
|---|---|---|
| Berlin | 09-03-1981 | BREUSING |

EPA form 1503.1 06.78